# EUROPÄISCHE PATENTSCHRIFT

(11) **EP 2 199 828 B1**
(45) Veröffentlichungstag und Bekanntmachung des Hinweises auf die Patenterteilung: **28.12.2011**
(21) Anmeldenummer: 09450183.0
(22) Anmeldetag: 24.09.2009
(51) Int. Cl.: G01S 17/89, G01S 17/06, G01S 17/02, G01S 5/16, G01S 7/481, G01S 17/48

(54) **Verfahren zum Bestimmen der Relativlage eines Laserscanners zu einem Referenzsystem**
Method for determining the position of a laser scanner relative to a reference system
Procédé de détermination de la position relative d'un scanner laser par rapport à un système de référence

(30) Priorität: 26.11.2008 AT 18462008
(43) Veröffentlichungstag der Anmeldung: 23.06.2010
(73) Patentinhaber: Riegl Laser Measurement Systems GmbH, 3580 Horn (AT)
(72) Erfinder: Ullrich, Andreas, 3003 Gablitz (AT); Studnicka, Nikolaus, 1190 Wien (AT); Rieger, Peter, 3824 Grossau (AT); Nussbaum, Jürgen, 3592 Röhrenbach (AT); Pfennigbauer, Martin, 3430 Tulln (AT); Riegl, Johannes, 3754 Trabenreith (AT)
(74) Vertreter: Weiser, Andreas

(56) Entgegenhaltungen:
- WO-A1-2008/054203
- WO-A1-2009/046519
- GB-A- 2 372 656
- GB-A- 2 443 856

## Beschreibung

Die vorliegende Erfindung betrifft ein Verfahren zum Bestimmen der Relativlage eines Laserscanners, der in einer Abtastebene ein 2D-Profil seiner Umgebung erfaßt und von einem Beförderungsmittel in einer abtastebenen-fremden Fahrtrichtung mitgeführt wird, um ein 3D-Abbild der Umgebung zu erstellen, relativ zu einem Referenzsystem des Beförderungsmittels.

Laserscanner dieser Art sind beispielsweise aus der GB 2 434 269 A oder der WO 2008/054203 A1 bekannt und dienen zur terristrischen Landvermessung in Form des sogenannten Mobile Scanning bzw. Mobile Mapping. Dabei wird die Topographie der Landschaft von einem fahrenden Land- oder Wasserfahrzeug aus erfaßt, welches den Laserscanner trägt. Mobile Scanning-Systeme sind wesentlich kostengünstiger als luft- oder satellitengestützte Vermessungssysteme und können überdies aus Luftsicht unzugängliche Gebiete erfassen, beispielsweise Straßenzüge, Wasserstraßen, Tunnels, Bergwerksbauten usw.

Für die Meßgenauigkeit des Mobile Scanning ist es von entscheidender Bedeutung, daß die Bewegungsbahn und -orientierung des Fahrzeugs, hier unter dem Begriff "Trajektorie" zusammengefaßt, sowie die Lage des Laserscanners am Fahrzeug genau bekannt sind. Bereits Winkelabweichungen von wenigen Milligrad können über die von den Abtaststrahlen zurückzulegenden langen Wege zu signifikanten Vermessungsfehlern führen.

Zur Bestimmung der Trajektorie wird üblicherweise ein am Fahrzeug montiertes Trägheitsmeßsystem ("inertial measurement unit", IMU) in Verbindung mit einem Satellitennavigationssystem ("global navigation satellite system", GNSS) als Referenzsystem für die Bewegung herangezogen. Die Relativlage des Laserscanners gegenüber dem Referenzsystem muß bislang mittels Kalibriermessungen in einer kontrollierten Meßumgebung mit definierten Meßstrecken und -punkten einjustiert werden. Bei der Erstmontage und jeder neuerlichen Montage des Laserscanners am Fahrzeug, z.B. zu Reparaturzwecken oder wenn verschiedene Anlagen modular gewechselt werden sollen, ist jedesmal eine Kalibrierung in der Meßumgebung erforderlich, was überaus zeit- und kostenintensiv ist.

Die Erfindung setzt sich zum Ziel, die Nachteile des bekannten Stand der Technik zu überwinden und ein Verfahren zum Bestimmen der Relativlage eines Laserscanners gegenüber einem Bewegungsreferenzsystem zu schaffen, welches einfach, rasch und ohne besondere Hilfsmittel durchgeführt werden kann. Dieses Ziel wird mit einem Verfahren der einleitend genannten Art erreicht, das die folgenden Schritte aufweist:
Verwenden eines Laserscanners, dessen Abtastebene in zumindest zwei Winkelstellungen gegenüber dem Referenzsystem verstellbar ist,
Erstellen zweier 3D-Abbilder eines ausgewählten Umgebungsbereichs unter zwei verschiedenen Winkelstellungen des Laserscanners, und
Bestimmen der genannten Relativlage aus einem Vergleich der Raumlage eines Objekts im ersten 3D-Abbild mit der Raumlage desselben Objekts im zweiten 3D-Abbild.

Das Verfahren der Erfindung beruht auf der Erkenntnis, daß sich ein Winkelversatz in der Relativlage des Laserscanners gegenüber dem Bewegungsreferenzsystem bei zwei Scandurchgängen mit verschiedenen Winkelstellungen der Abtastebene in einem Winkelversatz der beiden 3D-Abbilder niederschlägt, welcher gemessen werden kann und einen direkten Rückschluß auf die Relativlage zuläßt. Das Verfahren der Erfindung erfordert dazu keine besondere Referenz- oder Meßumgebung, sondern kann direkt vor Ort ohne zusätzliche Hilfsmittel durchgeführt werden. Dies ermöglicht sowohl eine rasche Erstmontage als auch einen raschen Austausch des Laserscanners zu Reparaturzwecken, für eine vorübergehende anderweitige Verwendung des Laserscanners fernab vom Beförderungsmittel oder für einen modularen Wechsel verschiedener Laserscanner an einem bestimmten Beförderungsmittel ohne Abstriche in der Abbildungsgenauigkeit.

Die Veränderung der Abtastebene des Laserscanners kann auf verschiedene Arten erreicht werden. Beispielsweise kann der Laserscanner zwei elektronisch oder optisch umschaltbare Strahlfächer ausstrahlen, oder auch nur einen einzigen Strahlfächer, der mit Hilfe einer mechanischen Schwenklagerung des Laserscanners in unterschiedliche Winkelstellungen bringbar ist. Besonders vorteilhaft ist es, wenn als Laserscanner zumindest ein steuerbarer 3D-Laserscanner eingesetzt wird. Ein 3D-Laserscanner erzeugt einerseits einen Strahlfächer in einer Abtastebene zur Erfassung eines 2D-Profils und rotiert anderseits um eine zusätzliche Achse, um über den gewählten Rotationswinkel aus einer Vielzahl von 2D-Profilen ein 3D-Abbild der Umgebung zu erzeugen. Die Verwendung eines solchen 3D-Laserscanners hat den Vorteil, daß die jeweilige Winkelstellung der Abtastebene aufgrund der geräteintern bereits vorhandenen Mechatronik zur Winkelsteuerung besonders genau bekannt ist und die Rotationsachse genau mit der Scannerachse zusammenfällt.

Gemäß einem weiteren bevorzugten Merkmal der Erfindung können aus der so ermittelten Relativlage des Laserscanners die Relativlagen allfälliger weiterer vom Beförderungsmittel mitgeführter Laserscanner relativ zum genannten Laserscanner und/oder zum Referenzsystem ermittelt werden, u.zw. mittels der Schritte

Erstellen eines weiteren 3D-Abbilds desselben Umgebungsbereichs mittels des weiteren Laserscanners, und
Bestimmen der genannten Relativlage aus einem Vergleich der Raumlage des Objekts im weiteren 3D-Abbild mit zumindest einer der zuvor ermittelten Raumlagen.

In einer ersten bevorzugten Ausführungsform der Erfindung werden die zwei genannten 3D-Abbilder mit Hilfe der folgenden Schritte erstellt:
Erstellen des ersten 3D-Abbilds des Umgebungsbereichs durch Bewegen des Beförderungsmittels in einer ersten Fahrtrichtung und Halten der Abtastebene in einer ersten Winkelstellung, und
Erstellen des zweiten 3D-Abbilds etwa desselben Umgebungsbereichs durch Bewegen des Beförderungsmittels in einer zweiten Fahrtrichtung und Halten der Abtastebene in einer zweiten Winkelstellung.

Besonders vorteilhaft ist es, wenn die erste Fahrtrichtung der zweiten Fahrtrichtung und die erste Winkelstellung der zweiten Winkelstellung entgegengesetzt ist. Beim Vergleichen der Raumlagen in den 3D-Abbildern brauchen dadurch weniger fahrtrichtungs- und winkelstellungsbedingte Verzerrungen kompensiert zu werden.

In einer zweiten bevorzugten Ausführungsform der Erfindung werden die beiden 3D-Abbilder mit Hilfe der folgenden Schritte erstellt:
Erstellen des ersten 3D-Abbilds des Umgebungsbereichs durch Halten der Abtastebene und Bewegen des Beförderungsmittels, und voraus- oder nachgehendes
Erstellen des zweiten 3D-Abbilds etwa desselben Umgebungsbereichs durch Halten des Beförderungsmittels und aufeinanderfolgendes Versetzen der Abtastebene in zumindest zwei verschiedene Winkelstellungen.

Bevorzugt wird dabei die Abtastebene in zahlreiche aufeinanderfolgende Winkelstellungen verschwenkt, wodurch bei stillstehendem Beförderungsmittel eine höhere räumliche Auflösung erreicht werden kann, welche die Objektidentifizierung in den 3D-Abbildern erleichtert.

Eine implementierungstechnisch besonders günstige Ausführungsform des Verfahrens zeichnet sich dadurch aus, daß in den genannten Vergleichen die Relativlage aus der Raumwinkeldifferenz der Raumlagen einer ausgewählten Raumachse des Objekts, bereinigt um die genannten Fahrtrichtungs- und Winkelstellungsänderungen zwischen den verschiedenen 3D-Abbildern, bestimmt wird.

Bevorzugt wird als Objekt eine in der Umgebung detektierte Fläche und als genannte Raumachse deren Flächennormale ausgewählt, wodurch Implementierungen mit besonders geringen Rechenzeiten erreicht werden können.

In allen Varianten der Verfahren ist es besonders günstig, wenn der Laserscanner über eine Schnellbefestigung austauschbar am Beförderungsmittel montiert wird, was einen raschen Wechsel des Laserscanners im Feld ermöglicht.

Die Erfindung wird nachstehend anhand von in den beigeschlossenen Zeichnungen dargestellten Ausführungsbeispielen näher erläutert. In den Zeichnungen zeigen:
Fig. 1 ein Beförderungsmittel mit einem Laserscanner zur 3D-Erfassung eines Umgebungsbereichs in der Perspektivansicht;
die Fig. 2a und 2b eine erste Ausführungsform des Verfahrens der Erfindung in Form von Draufsichten auf ein Beförderungsmittel während des Erstellens zweier 3D-Abbilder;
die Fig. 3a und 3b eine zweite Ausführungsform des Verfahrens der Erfindung in Form von Draufsichten auf ein Beförderungsmittel während des Erstellens zweier 3D-Abbilder;
Fig. 4 den Schritt des Bestimmens der Relativlage des Laserscanners aus dem Vergleich der Raumlagen eines Objekts in den 3D-Abbildern;
Fig. 5 eine Draufsicht auf eine Ausführungsform mit mehreren Laserscannern zur Verwendung in dem Verfahren der Erfindung; und
Fig. 6 den Schritt des Bestimmens der Relativlage eines weiteren vom Beförderungsmittel mitgeführten Laserscanners gegenüber dem Referenzsystem und/oder anderen Laserscannern.

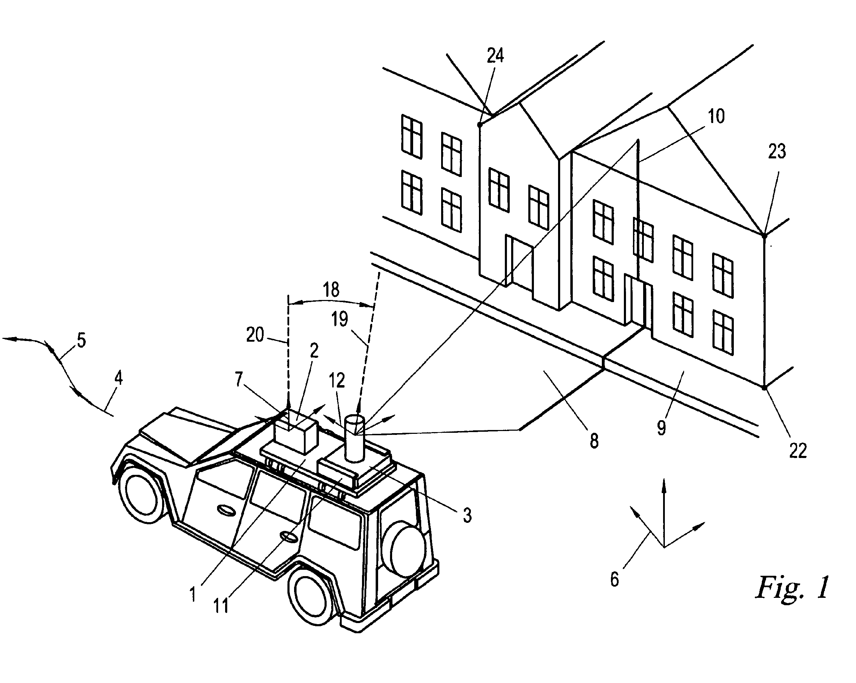

Fig. 1 zeigt ein Beförderungsmittel 1 in Form eines Geländewagens mit einem Dachträger, auf dem ein Referenzsystem 2 und ein Laserscanner 3 montiert sind. Das Beförderungsmittel 1 bewegt sich entlang einer Trajektorie 4 mit jeweils einer aktuellen Fahrtrichtung 5. Das Referenzsystem 2 ermittelt - z.B. mit Hilfe eines Trägheitsmeßsystems (IMU) und/oder eines Satellitennavigationssystems (GNSS) an sich bekannter Art - die jeweils aktuelle (zeitabhängig) Fahrtrichtung 5 und damit die Trajektorie 4 des Beförderungsmittels 1 in einem Weltkoordinatensystem 6, um daraus ein (zeitabhängiges) Referenzkoordinatensystem 7 für den Scanvorgang bereitzustellen, wie in der Technik bekannt.

Anstelle des gezeigten Geländewagens mit Dachträger kann das Beförderungsmittel 1 auch jedes beliebige andere Land-, Luft- oder Wasserfahrzeug sein, sowohl motor- als auch muskelkraftbetrieben, z.B. ein LKW, ein Schienenfahrzeug, ein Boot, eine Lore, eine Laufkatze oder im einfachsten Fall auch nur eine Trage.

Der Laserscanner 3 sendet in einer Abtastebene 8 einen Laserstrahlfächer auf eine Umgebung 9 aus, um aus der Reflektion des Laserstrahlfächers ein 2D-Profil 10 der Umgebung 9 zu erfassen. Durch Bewegen des Beförderungsmittels 1 in einer abtastebenen-fremden Fahrtrichtung 5 wird somit aus mehreren aufeinanderfolgenden 2D-Profilen 10 ein 3D-Abbild der Umgebung 9 erstellt und beispielsweise in einem Speicher des Laserscanners 3 gespeichert. Wie dem Fachmann bekannt, wird dabei - oder auch erst in einer späteren Offline-Auswertung der Scanner-Rohdaten - die vom Referenzsystem 2 ermittelte Trajektorie 4 des Beförderungsmittels 1 berücksichtigt, um die im Referenzkoordinatensystem 7 erfaßten 2D-Profile 10, um die Bewegungen bereinigt, als korrektes 3D-Abbild der Umgebung 9 im Weltkoordinatensystem 6 aufzubauen.

Der Laserscanner 3 ist in einem Gehäuse gelagert und mittels einer daran angreifenden Schnellbefestigung 11, z.B. in Form einer arretierbaren Einschubhalterung, modular austauschbar am Beförderungsmittel 1 montiert. Die Relativlage des Laserscanners 3 gegenüber dem Referenzsystem 2 unterliegt somit Gehäuselagerungs- und Montagetoleranzen, die vorweg nicht bekannt sind; der Laserscanner 3 hat damit ein eigenes Koordinatensystem 12. Zum korrekten Aufbau des 3D-Abbilds der Umgebung 9 im Weltkoordinatensystem 6 ist folglich auch die Kenntnis der Relativlage des Laserscanners 3 gegenüber dem Referenzsystem 2, d.h. die Lage des Koordinatensystems 12 gegenüber dem Koordinatensystem 7, erforderlich, und diese wird nun wie folgt bestimmt .

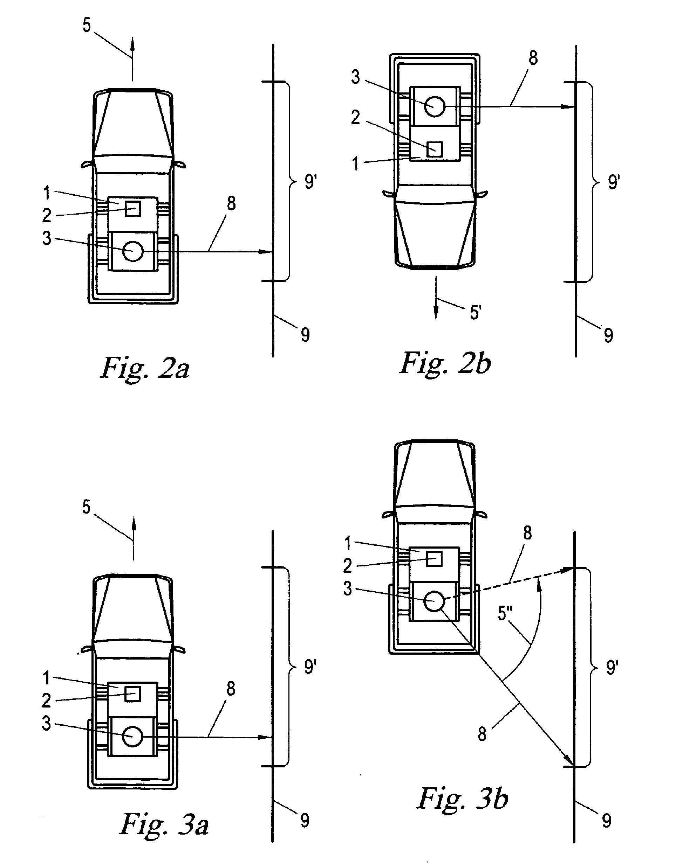

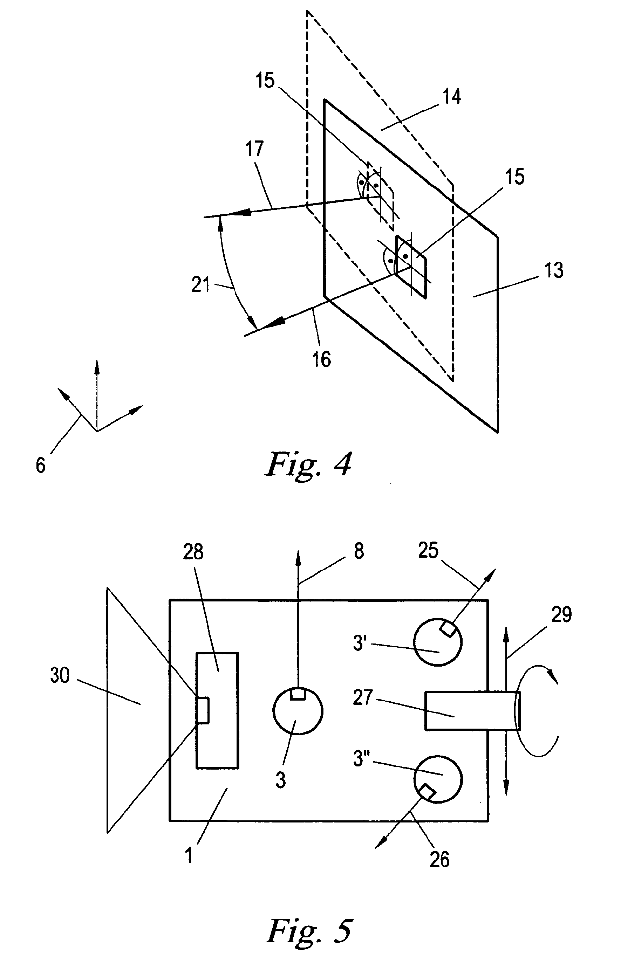

Wie in Fig. 2a gezeigt, wird in einem ersten Schritt das Beförderungsmittel 1 in einer ersten Fahrtrichtung 5 bewegt und die Abtastebene 8 des Laserscanners 3 in einer ersten Winkelstellung gehalten, um ein erstes 3D-Abbild 13 (Fig. 4) eines ausgewählten Bereichs 9' der Umgebung 9 zu erstellen. Anschließend wird, wie in Fig. 2b dargestellt, das Beförderungsmittel 1 in einer zweiten Fahrtrichtung 5' (hier: entgegengesetzt) entlang desselben Bereichs 9' bewegt und die Abtastebene 8 in einer zweiten Winkelstellung (hier: um 180° gewendet) gehalten, um ein zweites 3D-Abbild 14 (Fig. 4) desselben Umgebungsbereichs 9' zu erstellen.

In den beiden 3D-Abbildern 13, 14 wird nun jeweils ein und dasselbe Objekt 15 identifiziert, beispielsweise durch Musterdetektionsverfahren an sich bekannter Art. Im gezeigten Beispiel ist das Objekt ein flacher Bereich einer Gebäudefront.

Anschließend wird die jeweilige Raumlage des Objekts 15 in den 3D-Abbildern 13, 14 ermittelt, u.zw. bevorzugt anhand einer ausgewählten, z.B. leicht identifizierbaren Raumachse des Objekts 15. Bevorzugt wird als Objekt 15 eine Fläche ausgewählt, und die Flächennormalen 16, 17 des Objekts 15 in den 3D-Abbildern 13, 14 geben seine jeweilige Raumlage an, siehe Fig. 4.

Ein Relativversatz des Laserscanners 3 gegenüber dem Referenzsystem 2, z.B. eine Raumwinkeldifferenz 18 zwischen der Achse 19 des Koordinatensystems 12 und der Achse 20 des Koordinatensystems 7, schlägt sich in einer Raumwinkeldifferenz 21 der Raumachsen 16 und 17 des Objekts 15 in den 3D-Abbildern 13, 14 nieder. Damit kann aus einem Vergleich der Raumlagen des Objekts 15 in den 3D-Abbildern 13, 14 auf die Relativlage zwischen dem Laserscanner 3 und dem Referenzsystem 2 geschlossen werden.

Wenn beispielsweise die zweite Fahrtrichtung 5' der ersten Fahrtrichtung 5 und die zweite Winkelstellung der Abtastebene 8 der ersten Winkelstellung genau um 180° entgegengesetzt ist und die Fahrtrichtungen 5, 5' parallel zu einem flächenhaften Objekt 15 liegen (Fig. 2a, 2b), entspricht die Raumwinkeldifferenz 18 genau der halben Raumwinkeldifferenz 21 der Flächennormalen 16, 17. Wenn anderseits die Fahrtrichtungen 5, 5' und die Winkelstellungen der Abtastebene 8 von diesem Fall abweichen, brauchen die in den 3D-Abbildern 13, 14 ermittelten Raumlagen des Objekts 15 nur um die jeweiligen Fahrtrichtungs- und Winkelstellungsabweichungen kompensiert zu werden, um ausschließlich die auf den Winkelversatz des Laserscanners 3 gegenüber dem Referenzsystem 2 zurückzuführende Raumwinkeldifferenz 18 zu erhalten.

So könnten beispielsweise in einer alternativen Ausführungsform des Verfahrens der erste und/oder der zweite Scandurchgang der Fig. 2a und 2b auch jeweils in einer schräg zum Umgebungsbereich 9' verlaufenden Fahrtrichtung 5, 5' und/oder mit nicht-rechtwinkeligen Winkelstellungen der Abtastebene 8 erfolgen.

Ein flächenhaftes Objekt 15 könnte im einfachsten Fall auch bloß durch drei beliebige, signifikante Punkte 22, 23, 24 in der Umgebung 9 definiert werden. Dadurch könnten die 3D-Abbilder 13, 14, falls gewünscht, in ihrer Raumauflösung auf solche 2D-Profile 10 reduziert werden, welche diese Punkte enthalten oder umgeben, soferne eine entsprechende Auswahl der Punkte und/oder Vorjustierung der Abtastebene 8 auf bestimmte Punkte der Umgebung 9 möglich ist.

Die Fig. 3a und 3b zeigen eine weitere Verfahrensvariante, bei welcher im ersten Schritt (Fig. 3a) das Beförderungsmittel 1 in einer ersten Fahrtrichtung 5 entlang des Umgebungsbereichs 9' bewegt wird, um das erste 3D-Abbild 13 zu erzeugen, während im zweiten Schritt (Fig. 3b) das Beförderungsmittel 1 angehalten und die Abtastebene 8 des Laserscanners 3 in verschiedene Winkelstellungen gebracht wird, siehe Pfeil 5", um von demselben Umgebungsbereich 9' das zweite 3D-Abbild 14 zu erzeugen. Das zweite 3D-Abbild 14 wird um den Schwenkwinkel (Pfeil 5") kompensiert, d.h. entzerrt.

Der Verfahrensschritt von Fig. 3b kann auch vor dem Schritt von Fig. 3a ausgeführt werden. Die Fahrtrichtung 5 im Schritt von Fig. 3a, die Halteposition des Beförderungsmittel 1 im Schritt von Fig. 3b und/oder die Winkelstellungen der Abtastebenen 8 können auch anders als dargestellt gewählt werden, wie bereits erörtert.

Auf Grundlage der geschilderten Bestimmung der Relativlage des Laserscanners 3 gegenüber dem Referenzsystem 2 können anschließend die Relativlagen allfälliger weiterer vom Beförderungsmittel 1 mitgeführter Laserscanner ermittelt werden. Fig. 5 zeigt eine solche alternative Ausführungsform, welche drei 3D-Laserscannern 3, 3', 3" mit verschwenkbaren Abtastebenen 8, 25, 26 in vertikalen Richtungen zu beiden Seiten des Beförderungsmittels 1 und zwei 2D-Laserscanner 27, 28 trägt, von denen der eine am Heck des Beförderungsmittels 1 einen vertikalen Rundumfächer 29 und der andere einen schräg nach vorne oben oder unten gerichteten Laserfächer 30 abstrahlt.

Jeder der weiteren Laserscanner 3', 3", 27 und 28 verfügt jeweils - analog dem Laserscanner 3 in Fig. 1 mit seinem Koordinatensystem 12 - über ein eigenes (hier nicht weiter dargestelltes) Koordinatensystem, das gegenüber dem Laserscanner 3 und/oder dem Referenzsystem 2 fehlausgerichtet sein kann.

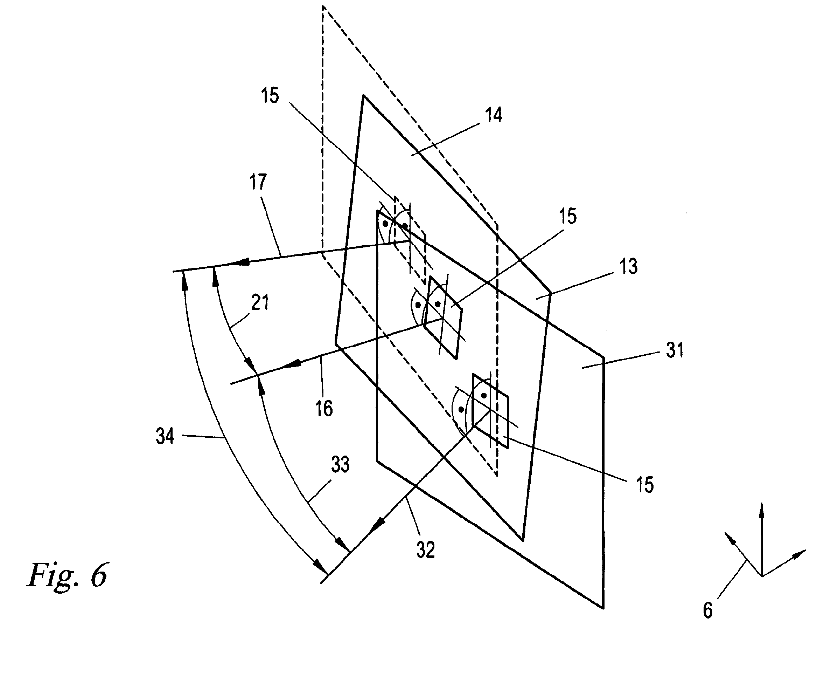

Zur Ermittlung der jeweiligen Relativlage der weiteren Laserscanners 3', 3", 27, 28 gegenüber dem Laserscanner 3 bzw. dem Referenzsystem 2 können die geschilderten Verfahren kaskadiert angewandt werden: Wie in Fig. 6 gezeigt, wird dazu für jeden weiteren Laserscanner mit diesem ein weiteres 3D-Abbild 31 des Umgebungsbereichs 9' erstellt, z.B. durch Abfahren gemäß den Fig. 2a und 2b oder Abschwenken gemäß den Fig. 3a und 3b, und darin wieder das Objekt 15 detektiert. Durch Vergleichen der Raumlage des Objekts 15 im 3D-Abbild 31 mit dessen Raumlage in zumindest einem der zuvor ermittelten 3D-Abbilder 13, 14, bevorzugt anhand der Raumwinkeldifferenzen 33, 34 seiner Raumachse 32 gegenüber den Raumachsen 16 bzw. 17, kann nun die Relativlage jedes weiteren Laserscanners 3', 3", 27 bzw. 28 gegenüber dem Laserscanner 3 und/oder dem Referenzsystem 2 ermittelt werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zum Bestimmen der Relativlage eines Laserscanners (3), der in einer Abtastebene (8) ein 2D-Profil (10) seiner Umgebung (9) erfaßt und von einem Beförderungsmittel (1) in einer abtastebenen-fremden Fahrtrichtung (5) mitgeführt wird, um ein 3D-Abbild (13, 14) der Umgebung (9) in einem Weltkoordinatensystem (6) aufzubauen, relativ zu einem Referenzsystem (2), das vom Beförderungsmittel (1) mitgeführt wird, um dessen Trajektorie (4) im Weltkoordinatensystem (6) für den genannten Aufbau des 3D-Abbilds im Weltkoordinatensystem (6) zu ermitteln, mit den Schritten:
Verwenden eines Laserscanners (3), dessen Abtastebene (8) in zumindest zwei Winkelstellungen gegenüber dem Referenzsystem (2) verstellbar ist,
Erstellen zweier 3D-Abbilder (13, 14) eines ausgewählten Umgebungsbereichs (9') unter zwei verschiedenen Winkelstellungen des Laserscanners (3), und
Bestimmen der genannten Relativlage aus einem Vergleich der Raumlage (16) eines Objekts (15) im ersten 3D-Abbild (13) mit der Raumlage (17) desselben Objekts (15) im zweiten 3D-Abbild (14).

2. Verfahren nach Anspruch 1, **dadurch gekennzeichnet, daß** als Laserscanner (3) zumindest ein steuerbarer 3D-Laserscanner (3, 3', 3") eingesetzt wird.

3. Verfahren nach Anspruch 1 oder 2 zum Bestimmen der Relativlage zumindest eines weiteren vom Beförderungsmittel (1) mitgeführten Laserscanners (3', 3", 27, 28) relativ zum genannten Laserscanner (3) und/oder zum Referenzsystem (2), **gekennzeichnet durch** die Schritte
Erstellen eines weiteren 3D-Abbilds (31) desselben Umgebungsbereichs (9') mittels des weiteren Laserscanners (3', 3", 27, 28), und
Bestimmen der genannten Relativlage aus einem Vergleich der Raumlage (32) des Objekts (15) im weiteren 3D-Abbild (31) mit zumindest einer der zuvor ermittelten Raumlagen (16, 17).

4. Verfahren nach einem der Ansprüche 1 bis 3, **gekennzeichnet durch** die Schritte
Erstellen des ersten 3D-Abbilds (13) des Umgebungsbereichs (9') **durch** Bewegen des Beförderungsmittels (1) in einer ersten Fahrtrichtung (5) und Halten der Abtastebene (8) in einer ersten Winkelstellung, und
Erstellen des zweiten 3D-Abbilds (14) etwa desselben Umgebungsbereichs (9') **durch** Bewegen des Beförderungsmittels (1) in einer zweiten Fahrtrichtung (5') und Halten der Abtastebene (8) in einer zweiten Winkelstellung.

5. Verfahren nach Anspruch 4, **dadurch gekennzeichnet, daß** die erste Fahrtrichtung (5) der zweiten Fahrtrichtung (5') und die erste Winkelstellung der zweiten Winkelstellung entgegengesetzt ist.

6. Verfahren nach einem der Ansprüche 1 bis 3, **gekennzeichnet durch** die Schritte
Erstellen des ersten 3D-Abbilds (13) des Umgebungsbereichs (9') **durch** Halten der Abtastebene (8) und Bewegen des Beförderungsmittels (1), und voraus- oder nachgehendes
Erstellen des zweiten 3D-Abbilds (14) etwa desselben Umgebungsbereichs (9') **durch** Halten des Beförderungsmittels (1) und aufeinanderfolgendes Versetzen der Abtastebene (8) in zumindest zwei verschiedene Winkelstellungen.

7. Verfahren nach Anspruch 6, **dadurch gekennzeichnet, daß** die Abtastebene (8) in zahlreiche aufeinanderfolgende Winkelstellungen verschwenkt wird.

8. Verfahren nach einem der Ansprüche 1 bis 7, **dadurch gekennzeichnet, daß** in den genannten Vergleichen die Relativlage aus der Raumwinkeldifferenz (21, 33, 34) der Raumlagen einer ausgewählten Raumachse (16, 17, 32) des Objekts (15), bereinigt um die genannten Fahrtrichtungs- und Winkelstellungsänderungen zwischen den verschiedenen 3D-Abbildern (13, 14, 31), bestimmt wird.

9. Verfahren nach einem der Ansprüche 1 bis 8, **dadurch gekennzeichnet, daß** als Objekt (15) eine im Umgebungsbereich (9') detektierte Fläche und als genannte Raumachse deren Flächennormale (16, 17, 32) ausgewählt wird.

10. Verfahren nach einem der Ansprüche 1 bis 9, **dadurch gekennzeichnet, daß** der Laserscanner (3) über eine Schnellbefestigung (11) austauschbar am Beförderungsmittel (1) montiert wird.

## Claims

1. Method for determining the relative position of a laser scanner (3), which captures a 2D profile (10) of its surrounding area (9) in a scanning plane (8) and is carried by a transport means (1) in a travel direction (5) outside the scanning plane in order to set up a 3D image (13, 14) of the surrounding area (9) in a world coordinate system (6) in relation to a reference system (2) carried by the transport means (1) to determine the trajectory (4) thereof in the world coordinate system (6) for the said set-up of the 3D image in the world coordinate system (6), with the steps:
using a laser scanner (3), the scanning plane (8) of which is adjustable in at least two angle positions in relation to the reference system (2),
creating two 3D images (13, 14) of a selected surrounding area (9') with two different angle positions of the laser scanner (3), and
determining the said relative position from a comparison of the spatial position (16) of an object (15) in the first 3D image (13) with the spatial position (17) of the said object (15) in the second 3D image (14).

2. Method according to claim 1, **characterised in that** at least one controllable 3D laser scanner (3, 3', 3") is used as laser scanner (3).

3. Method according to claim 1 or 2 for determining the relative position of at least one further laser scanner (3', 3", 27, 28) carried by the transport means (1) in relation to the said laser scanner (3) and/or to the reference system (2), **characterised by** the steps creating a further 3D image (31) of the said surrounding area (9') by means of the further laser scanner (3', 3", 27, 28), and
determining the said relative position from a comparison of the spatial position (32) of the object (15) in the further 3D image (31) with at least one of the previously determined spatial positions (16, 17).

4. Method according to one of claims 1 to 3, **characterised by** the steps creating the first 3D image (13) of the surrounding area (9') by moving the transport means (1) in a first travel direction (5) and holding the scanning plane (8) in a first angle position, and
creating the second 3D image (14) of approximately the same surrounding area (9') by moving the transport means (1) in a second travel direction (5') and holding the scanning plane (8) in a second angle position.

5. Method according to claim 4, **characterised in that** the first travel direction (5) is opposed to the second travel direction (5') and the first angle position is opposed to the second angle position.

6. Method according to one of claims 1 to 3, **characterised by** the steps creating the first 3D image (13) of the surrounding area (9') by holding the scanning plane (8) and moving the transport means (1), and previously or subsequently creating the second 3D image (14) of approximately the same surrounding area (9') by holding the transport means (1) and consecutively displacing the scanning plane (8) in at least two different angle positions.

7. Method according to claim 6, **characterised in that** the scanning plane (8) is pivoted into numerous consecutive angle positions.

8. Method according to one of claims 1 to 7, **characterised in that** in the said comparisons the relative position is determined from the spatial angle difference (21, 33, 34) of the spatial positions of a selected spatial axis (16, 17, 32) of the object (15) corrected by the said changes in travel direction and angle position between the different 3D images (13, 14, 31).

9. Method according to one of claims 1 to 8, **characterised in that** a surface detected in the surrounding area (9') is selected as object (15) and the surface normal (16, 17, 32) thereof is selected as said spatial axis.

10. Method according to one of claims 1 to 9, **characterised in that** the laser scanner (3) is replaceably mounted on the transport means (1) by means of a quick-fastening device (11).

## Revendications

1. Procédé de détermination de la position relative d'un scanner à laser (3), qui saisit, dans un plan de palpage (8), un profil en deux dimensions (10) de son environnement (9) et qui est entraîné par un moyen de convoyage (1) dans une direction de transport (5) différente du plan de palpage, afin de construire une image en trois dimensions (13, 14) de l'environnement (9) dans un système de coordonnées universel (6), par rapport à un système de référence (2) qui est entraîné par le moyen de convoyage (1), afin de déterminer sa trajectoire (4) dans le système de coordonnées universel (6) pour ladite construction de l'image en trois dimensions dans le système de coordonnées universel (6), comprenant les étapes consistant à :
utiliser un scanner à laser (3) dont le plan de palpage (8) est réglable dans au moins deux position angulaire par rapport au système de référence (2),
établir deux images en trois dimensions (13, 14) d'une zone choisie de l'environnement (9') sous deux positions angulaires différentes du scanner à laser (3), et
déterminer ladite position relative à partir d'une comparaison de la position dans l'espace (16) d'un objet (15) dans la première image en trois dimensions (13) avec la position dans l'espace (17) du même objet (15) dans la seconde image en trois dimensions (14).

2. Procédé selon la revendication 1, **caractérisé en ce que** l'on emploie, à titre de scanner à laser (3), au moins un scanner à laser en trois dimensions (3, 3', 3") susceptible d'être commandé.

3. Procédé selon la revendication 1 ou 2 pour déterminer la position relative d'au moins un autre scanner à laser (3', 3", 27, 28), entraîné par le moyen de convoyage (1), par rapport au scanner à laser précité (3) et/ou par rapport au système de référence (2), **caractérisé par** les étapes consistant à :
établir une autre image en trois dimensions (31) de la même zone de l'environnement (9') au moyen de l'autre scanner à laser (3', 3", 27, 28), et
déterminer la position relative précitée à partir d'une comparaison de la position dans l'espace (32) de l'objet (15) dans l'autre image en trois dimensions (31) avec l'une au moins des positions dans l'espace (16, 17) auparavant déterminées.

4. Procédé selon l'une des revendications 1 à 3, **caractérisé par** les étapes consistant à
établir la première image en trois dimensions (13) de la zone de l'environnement (9') par déplacement du moyen de convoyage (1) dans une première direction de transport (5) et maintien du plan de palpage (8) dans une première situation angulaire, et
établir la seconde image en trois dimensions (14) approximativement de la même zone de l'environnement (9') par déplacement du moyen de convoyage (1) dans une seconde direction de transport (5') et maintien du plan de palpage (8) dans une seconde situation angulaire.

5. Procédé selon la revendication 4, **caractérisé en ce que** la première direction de transport (5) est opposée à la seconde direction de transport (5'), et la première situation angulaire est opposée à la seconde situation angulaire.

6. Procédé selon l'une des revendications 1 à 3, **caractérisé par** les étapes consistant à
établir la première image en trois dimensions (13) de la zone de l'environnement (9') par maintien du plan de palpage (8) et déplacement du moyen de convoyage (1), et avant ou après établir la seconde image en trois dimensions (14) approximativement de la même zone de l'environnement (9') par maintien du moyen de convoyage (1) et déplacement du plan de palpage (8) successivement dans au moins deux situations angulaires différentes.

7. Procédé selon la revendication 6, **caractérisé en ce que** le plan de palpage (8) est pivoté dans de nombreuses situations angulaires successives.

8. Procédé selon l'une des revendications 1 à 7, **caractérisé en ce que** dans les comparaisons précitées, la position relative est déterminée à partir de la différence des angles (21, 33, 34) des positions dans l'espace d'un axe choisi (16, 17, 32) de l'objet (15), débarrassée des modifications précitées de la direction de transport et des situations angulaires entre les différentes images en trois dimensions (13, 14, 31).

9. Procédé selon l'une des revendications 1 à 8, **caractérisé en ce que** l'on choisit comme objet (15) une surface détectée dans la zone de l'environnement (9'), et comme axe précité, la normale à cette surface (16, 17, 32).

10. Procédé selon l'une des revendications 1 à 9, **caractérisé en ce que** le scanner à laser (3) est monté sur le moyen de convoyage (1) de manière interchangeable via une fixation rapide (11).
